# EUROPÄISCHE PATENTSCHRIFT

(11) **EP 3 290 761 B1**
(45) Veröffentlichungstag und Bekanntmachung des Hinweises auf die Patenterteilung: **27.11.2019**
(21) Anmeldenummer: 17187139.5
(22) Anmeldetag: 21.08.2017
(51) Int. Cl.: F16K 31/50, F16K 41/10, F16K 41/12, F16K 1/04

(54) **ABSPERRVENTIL**
SHUT-OFF VALVE
SOUPAPE D'ARRÊT

(30) Priorität: 31.08.2016 DE 102016116209
(43) Veröffentlichungstag der Anmeldung: 07.03.2018
(73) Patentinhaber: Armaturen-Wolff Friedrich H. Wolff GmbH & Co. KG, 22419 Hamburg (DE)
(72) Erfinder: Wolff, Hendrik, 22419 Hamburg (DE)
(74) Vertreter: Marschall, Stefan

(56) Entgegenhaltungen:
- DE-A1- 1 500 249
- DE-B- 1 216 637
- DE-U1- 8 518 167
- DE-U1- 9 002 032
- FR-A- 498 893
- GB-A- 2 060 139
- GB-A- 191 507 053
- US-A- 2 658 717
- US-A- 3 461 913
- US-A- 4 688 601

## Beschreibung

Die Erfindung betrifft ein Absperrventil nach dem Oberbegriff des Patentanspruchs 1, insbesondere ein Schnellschlussventil, für ein flüssiges und/oder gasförmiges Fluid mit einem im Wesentlichen zylindrischen Absperrkörper, der über eine Spindel einer Antriebseinheit relativ zu einem Ventilsitz in einem Fluidraum eines Gehäusemittelteils entlang einer Hochachse eines Gehäuses verfahrbar ist.

Um bei einer Notabsperrung von Rohrleitungen auch bei hohem Betriebsdruck sowie im Fall von chemisch aggressiven und/oder gefährlichen Medien mit hoher Betriebstemperatur innerhalb einer kurzen Schließzeit ohne Hilfsenergie durch einen externen Impuls eine sichere Absperrung zu gewährleisten, sind aus dem Stand der Technik mittels Federn vorgespannte Schnellschlussventile bekannt. Derartige Schnellschlussventile kommen zur Absicherung einer Vielzahl von technischen Systemen, wie zum Beispiel Bohrtürmen, Kraftwerken oder Schiffen zum Einsatz, um in einem Notfall, wie einem Maschinenraumbrand oder dergleichen, Brennstoffzuleitungen aus sicherer Entfernung fernbetätigt verlässlich und dauerhaft abzusperren.

Aus der DE 10 2006 040 953 B4 ist ein Schnellschlussventil bekannt. Das Schnellschlussventil ist für den Normalbetrieb eines Systems mithilfe eines fernbetätigbaren Verriegelungselements in seinem Öffnungszustand arretiert. Ein Stößel des Auslösers reicht zu diesem Zweck unter bzw. in eine Spindelmutter hinein, in der sich die Spindel abstützt. Im Öffnungszustand des Schnellschlussventils wird eine Druckfeder zusammengedrückt und hierdurch vorgespannt. Der Absperrkörper bildet das Schließelement des Schnellschlussventils aus und ist fest mit der Spindel verbunden. Im Fall einer Auslösung des Schnellschlussventils wird der Stößel des Auslösers zurückgezogen und damit die Arretierung gelöst. Die vorgespannte Feder drückt den Absperrkörper auf den Ventilsitz und versperrt damit den Durchfluss. Das Schnellschlussventil schließt nach der Auslösung ohne weitere Energiezufuhr bzw. Hilfsenergie selbsttätig allein durch die mechanische Kraft der vorgespannten Feder.

Eine weitere Ausführungsform eines Schnellschlussventils verfügt über eine Faltenbalgabdichtung. Diese Ausführungsform zeichnet sich dadurch aus, dass zur Abdichtung der Spindel keine polymeren O-Ringe benötigt werden, sodass das Ventil auch für Medien mit hohen Temperaturen von bis zu 400 °C bzw. chemisch aggressiven Medien einsetzbar ist. Darüber hinaus ist eine sekundäre Spindelabdichtung vorgesehen, die bei etwaigen Undichtigkeiten des Faltenbalgs eine zusätzliche Absicherung bietet. Die weit außenliegende Feder dieses Schnellschlussventils wird aufgrund der Ferne vom Medienstrom nicht durch Wärmeeinfluss in seinen mechanischen Eigenschaften beeinträchtigt und unterliegt somit praktisch keinem Verschleiß durch Medieneinflüsse.

Den beiden vorstehend genannten Ventiltypen ist gemein, dass die Schließenergie allein durch die Kraft einer vorgespannten Feder realisiert wird. Das Öffnen und das Vorspannen der Feder erfolgt mittels eines manuell betätigbaren Handrads. Infolgedessen limitiert die Federkraft der mittels des Handrads vorspannbaren Feder einen maximal zulässigen Betriebsdruck des abzusperrenden Fluids, bis zu dem das Schnellschlussventil einsetzbar ist.

In geöffnetem Zustand des Schnellschlussventils ist der Absperrkörper vollständig vom Medium umgeben. Der hydrostatische Anteil des Drucks wirkt hierbei auf alle Flächen des Schnellschlussventils ein und führt zu Kraftwirkungen auf die Einheit von Dichtkörper und Spindel. Da die Spindel-Dichtkörper-Einheit rotationssymmetrisch ausgeführt ist, heben sich alle horizontalen Komponenten der durch den Druck des Mediums bedingten Kräfte gegenseitig auf, das heißt die resultierende, auf die Dichtkörper-Einheit horizontal einwirkende Kraft ist gleich Null. Die Komponentenrichtung "horizontal" bezieht sich auf eine aufrechte Einbaulage des Schnellschlussventils. Für den Schließvorgang sind nur vertikale Kraftkomponenten von Bedeutung. Bei steigendem Betriebsdruck des Mediums muss die Federkraft für eine sichere Absperrwirkung entsprechend größer sein, woraus sich in Abhängigkeit von einer Nennweite des Schnellschlussventils und den übrigen Betriebsbedingungen konstruktive Grenzen der vorbekannten Ausführungsformen von Schnellschlussventilen ergeben.

Druckschriftlicher Stand der Technik ist aus der GB 07053 A und der US 2 658 717 A bekannt. Die GB 07053 A zeigt ein Absperrventil mit einer Antriebsventilspindel und einer Ausgleichsventilspindel. Die Spindeln haben unterschiedliche Außendurchmesser. Die Ausgleichsventilspindel befindet sich in dem Fluidraum. Die US 2 658 717 A zeigt ein Absperrventil mit einer Antriebsventilspindel und einer Ausgleichsventilspindel, bei dem die Ausgleichsventilspindel aus dem Fluidraum hinausgeführt ist. Die Spindeln haben unterschiedliche Außendurchmesser. Weiterhin ist aus der DE 12 16 637 B ein Ventil mit einem Faltenbalg zur Spindelabdichtung bekannt.

Aufgabe der Erfindung ist es daher, ein Absperrventil bereitzustellen, welches zur Notabsperrung von Rohrleitungen auch bei einem hohem Betriebsdruck eines Mediums und zumindest teilweise bei chemisch aggressiven und/oder gefährlichen Medien mit hoher Betriebstemperatur ohne Hilfsenergie aufgrund eines externen Impulses innerhalb einer möglichst kurzen Schließzeit einen dauerhaft sicheren Abschluss einer Rohrleitung gewährleistet, wobei eine erforderliche Schließkraft zumindest weitestehend unabhängig von dem Druck des Mediums ist.

Diese Aufgabe wird durch ein Absperrventil mit den kennzeichnenden Merkmalen des Patentanspruchs 1 gelöst, wonach eine antriebsseitige erste Absperrkörperfläche und eine dieser gegenüberliegende zweite Absperrkörperfläche zumindest annähernd gleich groß sind, wobei die antriebsseitige Ventilspindel mit dem Absperrkörper gekoppelt ist und auf dessen entgegengesetzter Seite eine abhängig und passiv verschiebbare Ausgleichs-Ventilspindel mit dem Absperrkörper verbunden ist. Die antriebsseitige Ventilspindel und die Ausgleichs-Ventilspindel weisen einen zumindest annähernd gleichen Außendurchmesser auf. Hierdurch heben sich auf den Absperrkörper einwirkende, druckbedingte Kräfte weitestgehend gegeneinander auf. Die antriebsseitige Ventilspindel ist mittels eines ersten Metallfaltenbalgs und einer ersten Metallmembran gegen das Gehäuseoberteil abgedichtet. Hierdurch ist im Vergleich zu einer Abdichtung mit Hilfe von polymeren O-Ringen eine zuverlässige Abdichtung gegenüber Fluiden mit einer hohen Temperatur von bis zu 400 °C und/oder chemisch aggressiven Eigenschaften gewährleistet. Die Ausgleichs-Ventilspindel ist mittels eines zweiten Metallfaltenbalgs und einer zweiten Metallmembran gegenüber einem Gehäuseunterteil abgedichtet. Hierdurch ist die Ausgleichs-Ventilspindel exakt denselben Druckverhältnissen wie die zum axialen Verschieben des Absperrkörpers erforderliche antriebsseitige Ventilspindel ausgesetzt, so dass die Symmetrie der auf den Absperrkörper einwirkenden Kräfte gewahrt ist.

Infolgedessen wird eine weitgehende Unabhängigkeit der erforderlichen Schließkraft vom Druck des Fluids im Fluidraum erreicht, da bei dem erfindungsgemäßen Absperrventil die druckbeaufschlagten Flächen oberhalb und unterhalb des Absperrkörpers in Bezug zu dessen Hochachse im Wesentlichen gleich groß bemessen sind. Die Anwendung der erfindungsgemäßen Konstruktion ermöglicht somit den Einsatz von wesentlich kompakteren Federn mit einer geringeren Federkraft, so dass die Ausgestaltung des Gehäuseoberteils im Vergleich zur herkömmlichen Bauweise weniger massiv und demzufolge platzsparender ausgeführt werden kann. Die Formulierung "abhängig und passiv" bedeutet, dass die Ausgleichs-Ventilspindel bei einer Betätigung des Absperrkörpers über die antriebsseitige Ventilspindel oder im Falle einer Notschließung von dem Absperrkörper mitgeführt wird. Der Begriff bzw. Wortbestandteil "Spindel" sowie der im Folgenden noch verwendete Begriff "Spindelmutter" bedeuten in dieser Schrift nicht zwangsläufig, dass diese Bauteile mit einem Gewinde versehen sind oder im Gewindeeingriff miteinander stehen: Eine Spindel und/oder Spindelmutter kann hier insbesondere glatt bzw. gewindefrei sein.

Ferner bewirkt der Schließvorgang keine volumenmäßige Reduzierung des Fluidraums innerhalb des Absperrventils, so dass vor allem im Fall von inkompressiblen Medien eine zusätzliche Druckerhöhung durch den Schließvorgang vermieden wird. Das erfindungsgemäße, federbelastete Absperrventil ist daher für Betriebsbedingungen prädestiniert, für die konventionelle, marktübliche Absperrventile grundsätzlich nicht ohne weiteres geeignet sind. Das erfindungsgemäße Absperrventil ist vorzugsweise nach Art eines so genannten "globe valve" oder eines "Rhei"-Ventils ausgeführt. Aufgrund der minimalen Betätigungskräfte ist das erfindungsgemäße Absperrventil besonders für fernbetätigbare Stellantriebe bzw. Aktoren geeignet. Elektrische Stellantriebe zum Betätigen des Absperrventils müssen aufgrund des praktisch kraftlos sowie unabhängig vom Betriebsdruck des Fluids verfahrbaren Absperrkörpers nicht selbsthemmend sein. Nicht selbsthemmende Stellantriebe erfordern zur Lagesicherung einer jeweils mittels des Stellantriebs eingestellten Axialposition des Absperrkörpers keine zusätzlichen Komponenten mehr. Pneumatische Stellantriebe in einfach wirkender, federschließender Bauweise oder auch in doppelt wirkender Bauweise sind ebenfalls für eine hubstabile Betätigung des Absperrventils einsetzbar, da eine Änderung des Betriebsdrucks nicht das Kräftegleichgewicht zwischen der Schließkraft des Stellantriebs und dem Druck des Fluids verschiebt. Dasselbe gilt für hydraulische Stellantriebe in einfach wirkender, federschließender Bauweise. Da der Antrieb des Absperrventils beim Schließvorgang keinem Mediendruck entgegenwirken muss, können zudem leistungsschwächere und damit kostengünstigere Stellantriebe zur Anwendung kommen.

Im Fall einer bevorzugten Ausgestaltung sind eine erste Verbindung zwischen der antriebsseitigen Ventilspindel und dem Absperrkörper und eine zweite Verbindung zwischen der Ausgleichs-Ventilspindel und dem Absperrkörper hinsichtlich einer Umströmbarkeit durch das Fluid annähernd gleich ausgebildet. Mit Hilfe der annähernd gleichen Ausbildung der Verbindungen, bevorzugterweise der mechanischen Verbindungen, werden unter anderem unterschiedliche Strömungswiderstände und statische Druckverhältnisse an den Verbindungen bzw. Befestigungen zwischen der Ventilspindel, der Ausgleichs-Ventilspindel und dem Absperrkörper vermieden.

Vorzugsweise ist das erfindungsgemäße Absperrventil nach Art eines Schnellschlussventils ausgebildet. Hierdurch kann das Absperrventil zum Beispiel auch als ein Notabsperrorgan zum Verschließen von Brennstoffleitungen etc. in einem Brandfall eines technischen Systems eingesetzt werden.

Bei einer günstigen Ausgestaltung ist die Antriebseinheit mit einer Spindelmutter und einer mit dieser im Eingriff befindlichen Antriebsspindel gebildet, wobei die Antriebsspindel zum axialen Verschieben der Spindelmutter entlang der Hochachse mittels eines Handrads betätigbar ist. Infolgedessen ist eine zuverlässige und robuste manuelle Betätigbarkeit des erfindungsgemäßen Absperrventils bei einem geringen Kraftaufwand seitens des Anwenders realisierbar. Anstelle einer Antriebsspindel, die sich im Eingriff mit einer Spindelmutter befindet, können beliebige elektrische, pneumatische und/oder hydraulische Stellantriebe bzw. Aktoren zur Betätigung des Absperrventils Verwendung finden.

Im Fall einer technisch günstigen Weiterbildung ist der Absperrkörper ausgehend von einem Schließzustand durch das Verdrehen des Handrads entgegen der Kraftwirkung einer Feder bis zum Erreichen eines Öffnungszustands bzw. geöffneten Öffnungszustands vom Ventilsitz abhebbar, wobei der Absperrkörper mittels einer Verriegelungseinrichtung in dem geöffneten Öffnungszustand arretierbar ist und der Absperrkörper durch das Auslösen der Verriegelungseinrichtung aufgrund der Kraftwirkung der vorgespannten Feder an den Ventilsitz pressbar ist, so dass der geschlossene Öffnungszustand bzw. Schließzustand erreicht ist. Mit anderen Worten, im Öffnungszustand ist der Absperrkörper derart arretiert, dass der Absperrkörper vom Ventilsitz abgehoben ist und das Absperrventil aufgesteuert ist. Im Schließzustand ist die Arretierung gelöst und der Absperrkörper befindet sich aufgrund der Feder in dichtender Anlage mit dem Ventilsitz, so dass das Absperrventil zugesteuert ist. Hierdurch ist neben einer manuellen Betätigbarkeit durch den Anwender des Absperrventils durch das gegebenenfalls auch fernbetätigte Auslösen des Verriegelungselements ein schnelles und selbsttätiges Schließen des Absperrventils in einer Notsituation möglich.

Bei einer weiteren vorteilhaften Ausgestaltung ist das Absperrventil nach Art eines stufenlosen Stellventils ausgebildet. Hierdurch ergeben sich weitere Anwendungsszenarien für das erfindungsgemäße Absperrventil, das in einer solchen Konstellation beispielsweise zur stetigen Durchflussmengenregelung eines Fluids einsetzbar ist.

Im Folgenden wird ein bevorzugtes Ausführungsbeispiel der Erfindung anhand von schematischen Figuren näher erläutert. Es zeigen
- Figur 1: einen Längsschnitt eines als Schnellschlussventil ausgestalteten erfindungsgemäßen Absperrventils,
- Figur 2: eine vergrößerte Darstellung des Ausschnitts II des Schnellschlussventils von Figur 1,
- Figur 3: eine schematische Draufsicht auf eine antriebsseitige erste Absperrkörperfläche des Schnellschlussventils von Fig. 1, und
- Figur 4: eine schematische Draufsicht auf eine zweite Absperrkörperfläche des Schnellschlussventils von Fig. 1.

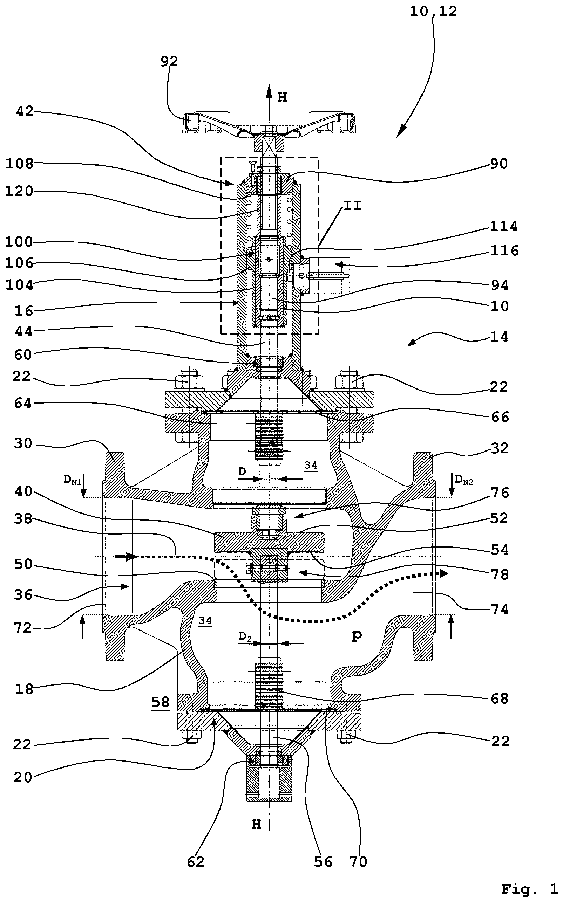

Die Figur 1 illustriert einen Längsschnitt eines als Schnellschlussventil ausgestalteten erfindungsgemäßen Absperrventils.

Ein erfindungsgemäßes Absperrventil 10 ist hier lediglich exemplarisch nach Art eines Schnellschlussventils 12 ausgeführt und dargestellt. Begriffe wie "oben" und "unten" beziehen sich im Kontext der vorliegenden Beschreibung auf die in Figur 1 lediglich exemplarisch dargestellte senkrechte Einbaulage des Schnellschlussventils 12 und hierbei auf dessen Hochachse H. Abweichend von der in Figur 1 lediglich exemplarisch gezeigten senkrechten Einbaulage kann das Schnellschlussventil 12 beidseitig um 90° verdreht positioniert sein.
Das Schnellschlussventil 12 verfügt über ein Gehäuse 14, das ein Gehäuseoberteil 16, ein Gehäusemittelteil 18 sowie ein Gehäuseunterteil 20 umfasst, die durch Schraubverbindungen 22 zusammengefügt sind. Das einstückig sowie bevorzugt als Gussteil gefertigte Gehäusemittelteil 18 ist durch zwei Ringflansche 30, 32 mit einer nicht dargestellten Rohrleitung verbunden und bildet einen Fluidraum 34 für ein gasförmiges und/oder flüssiges Fluid 36 aus. Die Strömungsrichtung des Fluids 36 durch den Gehäusemittelteil 18 ist durch den Pfeil 38 veranschaulicht. Insbesondere der Fluidraum 34 ist zur Minimierung von Turbolenzen nach Art eines so genannten "globe valve" oder eines "Rhei"-Ventils ausgebildet.

Ein im Wesentlichen zylindrischer bzw. scheibenförmiger Absperrkörper 40 ist in axialer Richtung entlang der Hochachse H mittels einer Antriebseinheit 42 und einer mit dieser gekoppelten antriebsseitigen Ventilspindel 44 relativ zu einem ringförmigen Ventilsitz 50 des Fluidraums 34 verfahrbar. In der hier mit durchgehenden Linien dargestellten Position ist der Absperrkörper 40 vom Ventilsitz 50 vollständig abgehoben, sodass ein Öffnungszustand erreicht ist, während der gestrichelt angedeutete Absperrkörper 40 allseitig fest an den Ventilsitz 50 gepresst ist, so dass ein Schließzustand des Schnellschlussventils 12 gegeben ist.

Eine erste antriebsseitige Absperrkörperfläche 52 des Absperrkörpers 40 und eine zweite, der antriebsseitigen Absperrkörperfläche 52 gegenüberliegende Absperrkörperfläche 54 des Absperrkörpers 40 sind zumindest annähernd gleich groß ausgebildet. Infolgedessen heben sich auf den Absperrkörper 40 einwirkende Druckkräfte des Fluids 36 gegenseitig auf, so dass abgesehen von Reibungsverlusten eine praktisch kraftlose Betätigung des Absperrkörpers 40 mittels der Antriebseinheit 42 möglich ist.

Um dies zu erreichen, ist an der zweiten Absperrkörperfläche 54 des Absperrkörpers 40 erfindungsgemäß eine Ausgleichs-Ventilspindel 56 befestigt, wobei zur Sicherstellung einer möglichst vollständigen Kompensation der vom Betriebsdruck p des Fluids 36 hervorgerufenen Druckkräfte ein hydraulisch wirksamer Außendurchmesser D₁ der antriebsseitigen Ventilspindel 44 gleich einem Außendurchmesser D₂ der Ausgleichs-Ventilspindel 56 ist. Die Ausgleichs-Ventilspindel 56 ist wie die antriebsseitige Ventilspindel 44 aus dem Fluidraum 34 herausgeführt, so dass ihre/deren von dem Absperrkörper abgewandte/n Stirnfläche/n nicht mit einem Fluiddruck beaufschlagt werden kann/können, was die auf den Absperrkörper wirkenden Druckkräfte vergrößert bzw. bei Herausführung nur einer der Ventilspindel 44, 56 einseitig zu Lasten eines an dem Absperrkörper 40 herrschenden Kräftegleichgewichts und somit zu Lasten einer kraftlosen Betätigung des Absperrkörpers 40 verschieben würde. Die Abdichtung der antriebsseitigen Ventilspindel 44 gegenüber der unter Normaldruck stehenden äußeren Umgebung 58 bzw. der Atmosphäre erfolgt mittels einer ersten Dichtung 60, während die Ausgleichs-Ventilspindel 56 mittels einer zweiten Dichtung 62 abgedichtet ist. Oberhalb oder unterhalb der beiden axialen Dichtungen 60, 62 sind der besseren zeichnerischen Übersicht halber nicht bezeichnete Führungselemente zur axialen Führung bzw. Lagerung der antriebsseitigen Ventilspindel 44 und der Ausgleichs-Ventilspindel 56 im Gehäuse 14 bzw. dem Gehäuseoberteil 16 und dem Gehäuseunterteil 20 vorgesehen.

Für den Fall, dass - wie hier lediglich beispielhaft dargestellt - zusätzlich oder alternativ zu den Dichtungen 60, 62 eine Abdichtung der antriebsseitigen Ventilspindel 44 gegenüber dem Gehäuse 14 mittels eines ersten Metallfaltenbalgs 64 sowie einer diesem zugeordneten ersten scheibenförmigen Metallmembran 66 und die Abdichtung der Ausgleichs-Ventilspindel 56 gegenüber dem Gehäuse 14 durch einen zweiten Metallfaltenbalg 68 und einer diesem zugeordneten zweiten scheibenförmigen Metallmembran 70 erfolgt, sind der besseren zeichnerischen Übersicht halber nicht bezeichnete Außendurchmesser der Metallfaltenbälge 64, 68 ebenfalls zumindest annähernd gleich groß bemessen. Darüber hinaus sind die Metallfaltenbälge 64, 68 jeweils in einem axial zurückgezogenen Zustand eingezeichnet. In einem montierten, axial teilweise auseinander gezogenen Zustand umschließen die Metallfaltenbälge 64, 68 die antriebsseitige Ventilspindel 44 und die Ausgleichs-Ventilspindel 56 abschnittsweise koaxial. Die Metallfaltenbälge 64, 68 kommen insbesondere bei Fluiden mit einer hohen Betriebstemperatur von bis zu 400 °C zum Einsatz, für die polymere O-Ringdichtungen nicht geeignet sind. Die antriebsseitige Ventilspindel 44 durchsetzt die erste Metallmembran 66, wobei die Abdichtung mittels des ersten Metallfaltenbalgs 64 erfolgt. Entsprechend ist die Ausgleichs-Ventilspindel 56 durch die zweite Metallmembran 70 geführt und gegenüber dieser mittels des zweiten Metallfaltenbalgs 68 hermetisch abgedichtet. Die erste Metallmembran 66 ist zwischen dem Gehäuseoberteil 16 und dem Gehäusemittelteil 18 dichtend eingespannt, während die zweite Metallmembran 70 zwischen dem Gehäusemittelteil 18 und dem Gehäuseunterteil hermetisch dichtend eingespannt ist.

Ein Einlasskanal 72 und ein Auslasskanal 74 des Schnellschlussventils 12 weisen jeweils einen gleich großen Nenndurchmesser D_{N1,2} auf.

Bevorzugterweise beträgt der Nenndurchmesser D_{N1,2} ohne Beschränkung der Allgemeinheit ca. 50 mm. Das Schnellschlussventil 12 ist bevorzugterweise ohne Beschränkung der Allgemeinheit ab einem Betriebsdruck p des Fluids 36 von ca. 16 bar bis zu einem Betriebsdruck p des Fluids 36 von ca. 40 bar einsetzbar. Der Vollständigkeit sei ergänzend erwähnt, dass die Nenndurchmesser und der Betriebsdruck von zahlreichen Bedingungen abhängen und somit das Absperrventil auch außerhalb des vorgenannten Nenndurchmessers und Druckbereichs betrieben werden kann, ohne dass dabei negative Einflüsse auf seine erfindungsgemäße kraftlose Betätigung entstehen.

Zur möglichst vollständigen Kompensation der auf den Absperrkörper 40 einwirkenden vertikalen Druckkräfte sind weiterhin eine erste mechanische Verbindung 76 zwischen der antriebsseitigen Ventilspindel 44 und dem Absperrkörper 40 sowie eine zweite mechanische Verbindung 78 zwischen der Ausgleichs-Ventilspindel 56 und dem Absperrkörper 40 hinsichtlich ihrer druckrelevanten und bezüglich ihrer strömungstechnisch maßgeblichen Geometrie unter Einbeziehung einer mechanischen Anbindung der optional vorgesehenen Metallfaltenbälge 64, 68 konstruktiv möglichst gleich ausgestaltet.

Die Antriebseinheit 42 des hier dargestellten Schnellschlussventils 12 umfasst eine im Gehäuseoberteil 16 befestigte Gewindebuchse 90 sowie eine drehfest aufgenommene Spindelmutter 100 mit einer mittels eines Handrads 92 um die Hochachse H drehbaren Antriebsspindel 94 zum axialen Verschieben der Spindelmutter 100 sowie des Absperrkörpers 40. Durch die Antriebseinheit 42 ist eine zusätzliche Führung der Antriebsspindel 94 und der antriebsseitigen Ventilspindel 44 im Gehäuseoberteil 16 gegeben.

Zum Betätigen des Absperrkörpers 40 ist die antriebsseitige Ventilspindel 44 mit der Antriebsspindel 94 durch eine in dem Gehäuseoberteil 16 axial verschiebbar aufgenommene, im Wesentlichen hohlzylindrische Spindelmutter 100 gekoppelt. Anstelle der mit der Gewindebuchse 90, dem Handrad 92 sowie der Antriebsspindel 94 gebildeten Antriebseinheit 42 kann ein beliebiger elektromechanischer, pneumatischer und/oder hydraulischer Stellantrieb bzw. Aktor zur Betätigung bzw. axialen Verschiebung des Absperrkörpers 40 mittels der antriebsseitigen Ventilstange 44 vorgesehen sein.

Die Spindelmutter 100 im Gehäuseoberteil 16 umfasst eine Innenhülse 102 und eine diese koaxial spaltfrei umgebende Außenhülse 104 mit einer radial auswärts gerichteten, scheibenförmigen Spindelmutter-Stößelauflage 106. Die Innenhülse 102 und die Außenhülse 104 sind fest miteinander, zum Beispiel durch Verschweißen, verbunden. Die Spindelmutter 100 ist mittels einer Feder 108, die sich zwischen der Gewindebuchse 90 und der Stößelauflage 106 der Spindelmutter 100 abstützt, beaufschlagt bzw. in Richtung des Ventilsitzes 50 mit einer geeignet hohen Federkraft axial vorgespannt, wobei die Drehbewegung der Antriebsspindel 94 von der antriebsseitigen Ventilspindel 44 entkoppelt ist. Durch die Spindelmutter 100 wird die Längsführung der Antriebsspindel 94 und der antriebsseitigen Ventilspindel 44 weiter vervollständigt.

In dem hier illustrierten geöffneten Zustand des Schnellschlussventils 12 liegt ein Stößel 114 einer bevorzugt fernbetätigbaren Verriegelungseinrichtung 116 unterhalb der Stößelauflage 106 der Spindelmutter 100 und verhindert somit, dass das Schnellschlussventil 12 selbsttätig in den geschlossenen Zustand übergeht, in dem der gestrichelt dargestellte Absperrkörper 40 zur möglichst schnellen Unterbrechung des Fluidstroms 38 aufgrund der Kraftwirkung der Feder 108 mit einer hinreichend hohen mechanischen Kraft zur Anlage an den Ventilsitz 50 gebracht wird bzw. an diesem anliegt.

Für den Fall, dass die Verriegelungseinrichtung 116 beispielsweise mit einem Elektromagneten realisiert ist, befindet sich dieser in dem gezeigten Öffnungszustand des Schnellschlussventils 12 in einem dauerhaft bestromten (Halte-)Zustand, sodass die Stößelauflage 106 der Spindelmutter 100 vom Stößel 114 abgestützt ist. Im Fall eines Stromausfalls oder einer gezielten fernbetätigten Unterbrechung der Stromversorgung des Elektromagneten in einem Notfall zieht eine nicht dargestellte Feder der Verriegelungseinrichtung 116 den Stößel 114 quer zur Hochachse H zurück, sodass der Stößel 114 die Spindelmutter 100 radial freigibt und der Absperrkörper 40 von der Feder 108 schlagartig gegen den Ventilsitz 50 gepresst wird und der geschlossene Zustand des Schnellschlussventils 12 erreicht ist. Anstelle eines Elektromagneten kann die Verriegelungseinrichtung 116 ein beliebiges manuell betätigbares mechanisches, pneumatisches und/oder hydraulisches Antriebsglied bzw. einen Aktor zum Auslösen des Schließzustands des Schnellschlussventils 12 aufweisen.

Ausgehend vom geschlossenen Zustand kann der der geöffnete Zustand des Schnellschlussventils 12 erreicht werden, indem das Handrad 92 z. B. im Uhrzeigersinn bis zum Anschlag verdreht wird, wodurch die Spindelmutter 100 und mit ihr die antriebsseitige Ventilspindel 44 mit dem Absperrkörper 40 entgegen der Federkraft der Feder 108 in Richtung der Gewindebuchse 90 soweit axial verschoben wird, bis der Stößel 114 der Verriegelungseinrichtung 116 wieder unter die Stößelauflage 106 der Spindelmutter 100 einrastet und das Schnellschlussventil 12 erneut seinen geöffneten Zustand 12 eingenommen hat.

Zwischen der Gewindebuchse 90 und der Spindelmutter 100 ist auf der Antriebsspindel 94 ferner eine hohlzylindrische Anschlaghülse 120 aufgeschoben, durch die ein zu weites Herausdrehen der Antriebsspindel 94 aus der Gewindebuchse 90 mittels des Handrads 92 der Antriebseinheit 42 zuverlässig und für einen Benutzer eindeutig haptisch wahrnehmbar verhindert wird.

Bei einem in den Zeichnungen nicht dargestellten Absperrventil ohne selbsttätige Schnellabsperrfunktion fehlen die Verriegelungseinrichtung 116 sowie die Feder 108. Weiterhin ist dann die mechanische Kopplung zwischen der Antriebsspindel 94 und der antriebsseitigen Ventilspindel 44 durch die Spindelmutter 100 entlang der Hochachse H beidseits verschiebefest ausgeführt.

Abweichend von der hier lediglich exemplarisch illustrierten bistabilen Ausführungsform des Schnellschlussventils 12 mit einem geöffneten und geschlossenen Öffnungszustand, kann das Schnellschlussventil 12 auch als ein mittels der Antriebseinheit 42 betätigbares, stetig arbeitendes Regelventil bzw. Stellventil mit einer Vielzahl von Zwischenstellungen bzw. Zwischenzuständen ausgebildet sein, das eine stufenlose Regulierung des Fluidstroms 38 zwischen Null und einem Maximalwert gestattet.

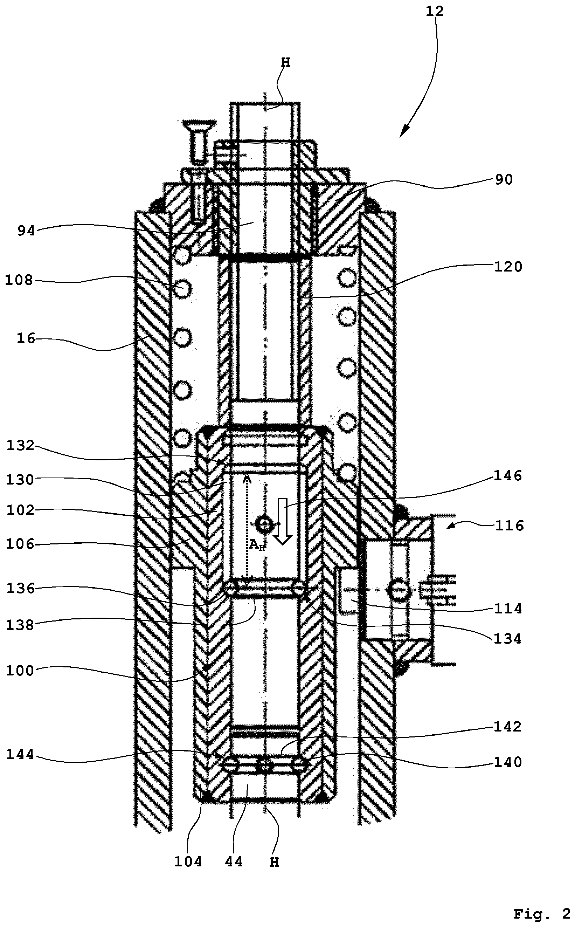

Die Figur 2 zeigt eine vergrößerte Darstellung des Ausschnitts II des Schnellschlussventils von Figur 1.

In Figur 2 befindet sich das Schnellschlussventil 12 im vorgespannten Öffnungszustand, in dem der Stößel 114 der Verriegelungseinrichtung 116 unterhalb der Stößelauflage 106 der aus der Innen- und Außenhülse 102, 104 zusammen gefügten Spindelmutter 100 eingerastet ist und somit deren Abwärtsbewegung entgegen der von der Feder 108 aufgebauten Federkraft verhindert.

Innerhalb der Innenhülse 102 ist eine zylindrische Erweiterung 130 bzw. Zylinderraum mit einer ersten und einer zweiten, jeweils endseitigen und hohlkehlartigen Anschlagfläche 132, 134 vorgesehen. Innerhalb der Erweiterung 130 sind ringförmig angeordnete Kugeln 136 axial zwischen den beiden Anschlagflächen 132, 134 axial verschiebbar aufgenommen. Die ringförmig angeordneten Kugeln 136 liegen hier in einer Außenringnut 138 der Antriebsspindel 94, wobei die Außenringnut 138 eine zumindest annähernd halbkreisförmige Querschnittsgeometrie aufweist.

Mittels weiteren ringförmig angeordneten Kugeln 140 ist die mechanische Kopplung zwischen der Spindelmutter 100 und der antriebsseitigen Ventilspindel 44 realisiert, wobei die ringförmig angeordneten Kugeln 140 hälftig in einer Außenringnut 142 der antriebsseitigen Ventilspindel 44 und einer Innenringnut 144 der Innenhülse 102 der Spindelmutter 100 aufgenommen ist. Die Anschlaghülse 120 dient zur zusätzlichen axialen Verfahrwegbegrenzung von Antriebspindel 94, Spindelmutter 100 und antriebsseitiger Ventilspindel 44.

Durch die beiden Anschlagflächen 132, 134 ist der maximale Axialhub AH des hier nicht dargestellten Absperrkörpers des Schnellschlussventils 12 definiert.

Im vorgespannten geöffneten Öffnungszustand liegen die ringförmig angeordneten Kugeln 136 an der zweiten Anschlagfläche 134 an. Wird das Schnellschlussventil 12 durch das Betätigen der Verriegelungseinrichtung ausgelöst, so drückt die Feder 108 die Spindelmutter 100 und mit ihr über die Kugeln 140 die antriebsseitige Ventilspindel 44 mit hier nicht dargestelltem Absperrkörper um den Axialhub A_{H} in Richtung des Pfeils 146 abwärts, wodurch der Schließzustand des Schnellschlussventils 12 erreicht wird. In diesem Zustand liegen die ringförmig angeordneten Kugeln 136 annähernd an der ersten Anschlagfläche 132 der zylindrischen Erweiterung 130 an. Um das Schnellschlussventil wieder in den vorgespannten Öffnungszustand zu versetzen, wird die Antriebsspindel 94 mithilfe des hier nicht eingezeichneten Handrads im Uhrzeigersinn so lange gedreht, bis die ringförmig angeordneten Kugeln 136 wiederum an der zweiten Anschlagfläche 134 der zylindrischen Erweiterung 130 anliegt und der Stößel 114 mit der Stößelauflage 106 der Spindelmutter 100 verrastet ist. Bei diesem Vorgang verschiebt sich wiederum die Spindelmutter 100 um den Axialhub A_{H}, jedoch in entgegengesetzter Richtung zu dem Pfeil 146. Die Anschlaghülse 120 stellt neben den hohlkehlartigen Anschlagflächen 132, 134 für die ringförmig angeordneten Kugeln 136 lediglich eine zusätzliche Verfahrwegbegrenzung dar, um ein zu weites Herausdrehen der Antriebsspindel 94 aus der Gewindebuchse 90 zu vermeiden.

Im Übrigen sind einem auf dem technischen Gebiet von Absperrorganen tätigen Fachmann die Funktion und der detaillierte konstruktive Aufbau von Schnellschlussventilen hinreichend geläufig, sodass an dieser Stelle auf eine eingehendere Beschreibung der Arbeitsweise des Schnellschlussventils 12 verzichtet werden kann.

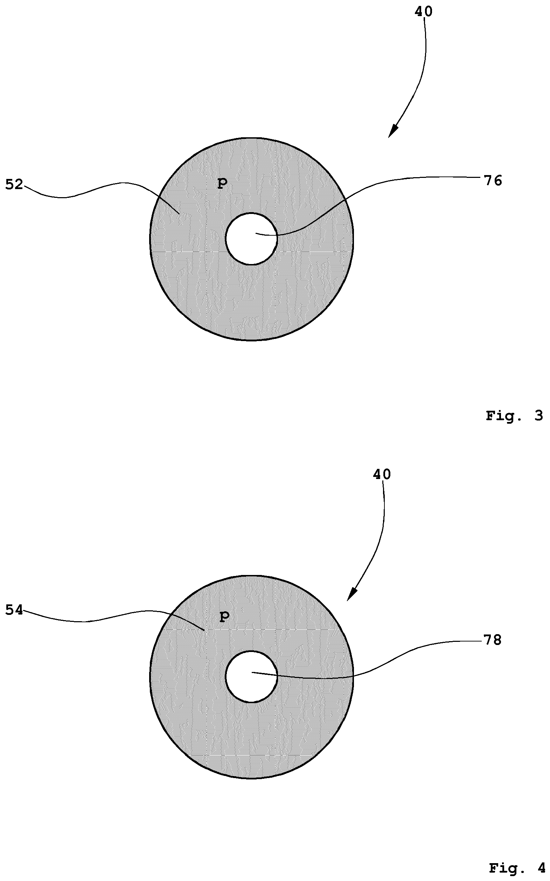

Die Figuren 3 und 4, auf die im weiteren Fortgang der Beschreibung zugleich Bezug wird, zeigen eine schematische Draufsicht auf eine antriebsseitige erste und eine dieser gegenüberliegende zweite Absperrkörperfläche des Schnellschlussventils von Fig. 1.

Die Absperrkörperflächen 52, 54 des Absperrkörpers 40 sind einschließlich der mechanischen Verbindungen 76, 78 zu den Ventilspindeln annähernd identisch, so dass sich die vom Betriebsdruck p des Fluids hervorgerufenen Druckkräfte in Bezug auf den Absperrkörper 40 gegenseitig aufheben bzw. zu Null addieren und eine zumindest annähernd kraftlose Betätigung des Absperrkörpers 40 gewährleistet ist.

Die Erfindung betrifft ein Absperrventil (10), insbesondere ein Schnellschlussventil (12), für ein flüssiges und/oder gasförmiges Fluid mit einem im Wesentlichen zylindrischen Absperrkörper (40), der über eine Antriebseinheit (42) und eine mit dieser gekoppelte antriebsseitige Ventilspindel (44) relativ zu einem Ventilsitz (50) in einem Fluidraum (34) eines Gehäusemittelteils (18) entlang einer Hochachse (H) eines Gehäuses (14) verfahrbar ist.

Erfindungsgemäß sind eine antriebsseitige erste Absperrkörperfläche (52) und eine dieser gegenüberliegende zweite Absperrkörperfläche (54) zumindest annähernd gleich groß, wobei die antriebsseitige Ventilspindel (44) mit dem Absperrkörper (40) gekoppelt ist und auf dessen entgegengesetzter Seite eine abhängig und passiv verschiebbare Ausgleichs-Ventilspindel (56) mit dem Absperrkörper (40) verbunden ist.

Infolgedessen ist eine zumindest annähernd kraftlose Betätigung des Absperrkörpers (40) mittels der Antriebseinheit (42) möglich.

### Bezugszeichenliste

- 10: Absperrventil
- 12: Schnellschlussventil
- 14: Gehäuse
- 16: Gehäuseoberteil
- 18: Gehäusemittelteil
- 20: Gehäuseunterteil
- 22: Schraubverbindung
- 30: Ringflansch
- 32: Ringflansch
- 34: Fluidraum
- 36: Fluid
- 38: Pfeil, Fluidstrom
- 40: Absperrkörper
- 42: Antriebseinheit Absperrkörper
- 44: antriebsseitige Ventilspindel
- 50: Ventilsitz
- 52: antriebsseitige erste Absperrkörperfläche
- 54: gegenüberliegende zweite Absperrkörperfläche
- 56: Ausgleichs-Ventilspindel
- 58: Umgebung
- 60: erste Dichtung
- 62: zweite Dichtung
- 64: erster Metallfaltenbalg
- 66: erste Metallmembran
- 68: zweiter Metallfaltenbalg
- 70: zweite Metallmembran
- 72: Einlasskanal
- 74: Auslasskanal
- 76: erste mechanische Verbindung
- 78: zweite mechanische Verbindung
- 90: Gewindebuchse
- 92: Handrad
- 94: Antriebsspindel
- 100: Spindelmutter
- 102: Innenhülse der Spindelmutter
- 104: Außenhülse der Spindelmutter
- 106: Spindelmutter-Stößelauflage
- 108: (Druck-)Feder
- 114: Stößel
- 116: Verriegelungseinrichtung
- 120: Anschlaghülse
- 130: zylindrische Erweiterung
- 132: erste Anschlagfläche
- 134: zweite Anschlagfläche
- 136: ringförmig angeordnete Kugeln
- 138: Außenringnut Antriebsspindel
- 140: ringförmig angeordnete Kugeln
- 142: Außenringnut antriebsseitge Ventilspindel
- 144: Innenringnut Innenhülse Betätigungshülse
- 146: Pfeil

- A_{H}: Axialhub
- D_{1,2}: Außendurchmesser Ventilspindel
- D_{N1,2}: Nenndurchmesser Ein- und Auslasskanal
- H: Hochachse
- p: Betriebsdruck Fluid

## Patentansprüche

1. Absperrventil (10), insbesondere ein Schnellschlussventil (12), für ein flüssiges und/oder gasförmiges Fluid mit einem im Wesentlichen zylindrischen Absperrkörper (40), der über eine Antriebseinheit (42) und eine mit dieser gekoppelte antriebsseitige Ventilspindel (44) relativ zu einem Ventilsitz (50) in einem Fluidraum (34) eines Gehäusemittelteils (18) entlang einer Hochachse (H) eines Gehäuses (14) verfahrbar ist,
wobei eine antriebsseitige erste Absperrkörperfläche (52) und eine dieser gegenüberliegende zweite Absperrkörperfläche (54) zumindest annähernd gleich groß sind,
wobei die antriebsseitige Ventilspindel (44) mit dem Absperrkörper (40) gekoppelt ist und auf dessen entgegengesetzter Seite eine abhängig und passiv verschiebbare Ausgleichs-Ventilspindel (56) mit dem Absperrkörper (40) verbunden ist,
wobei die antriebsseitige Ventilspindel (44) und die Ausgleichs-Ventilspindel (56) aus dem Fluidraum 34 herausgeführt sind,_so dass die von dem Absperrkörper abgewandten Stirnflächen nicht mit einem Fluiddruck beaufschlagt werden können und einen zumindest annähernd gleichen Außendurchmesser (D_{1,2}) aufweisen,
**dadurch gekennzeichnet, dass**
die antriebsseitige Ventilspindel (44) mittels eines ersten Metallfaltenbalgs (64) und einer ersten Metallmembran (66) gegenüber einem Gehäuseoberteil (16) abgedichtet ist, und
die Ausgleichs-Ventilspindel (56) mittels eines zweiten Metallfaltenbalgs (68) und einer zweiten Metallmembran (70) gegenüber einem Gehäuseunterteil (20) abgedichtet ist.

2. Absperrventil (10) nach Patentanspruch 1, wobei eine erste Verbindung (76) zwischen der antriebsseitigen Ventilspindel (44) und dem Absperrkörper (40) und eine zweite Verbindung (78) zwischen der Ausgleichs-Ventilspindel (56) und dem Absperrkörper (40) hinsichtlich ihrer Umströmbarkeit durch das Fluid (36) annähernd gleich ausgebildet sind.

3. Absperrventil (10) nach einem der vorhergehenden Patentansprüche, wobei das Absperrventil (10) nach Art eines Schnellschlussventils (12) ausgebildet ist.

4. Absperrventil (10) nach Patentanspruch 3, wobei die Antriebseinheit (42) mit einer Gewindebuchse (90) und einer mit dieser im Eingriff befindlichen Antriebsspindel (94) gebildet ist, wobei die Antriebsspindel (94) zum axialen Verschieben der Spindelmutter (100) entlang der Hochachse (H) mittels eines Handrads (92) betätigbar ist.

5. Absperrventil (10) nach Patentanspruch 3 oder 4, wobei der Absperrkörper (40) ausgehend von einem Schließzustand durch das Verdrehen des Handrads (92) entgegen der Kraftwirkung einer Feder (108) bis zum Erreichen eines geöffneten Öffnungszustands vom Ventilsitz (50) abhebbar ist, wobei der Absperrkörper (40) mittels einer Verriegelungseinrichtung (116) in dem Öffnungszustand arretierbar ist und der Absperrkörper (40) durch das Auslösen der Verriegelungseinrichtung (116) aufgrund der Kraftwirkung der vorgespannten Feder (108) an den Ventilsitz (50) pressbar ist und der geschlossene Öffnungszustand erreicht ist.

## Claims

1. A shut-off valve (10), particularly a quick-closing valve (12), for a liquid and/or gaseous fluid, having a substantially cylindrical plug (40), which can be moved relatively to a valve seat (50) in a fluid chamber (34) of a housing central part (18) along a vertical axis (H) of a housing (14) by means of a drive unit (42) and a valve spindle (44) coupled to the same on the drive side,
a drive-side first plug surface (52) and a second plug surface (54) opposite the same being at least approximately the same size,
the drive-side valve spindle (44) being coupled to the plug (40) and a compensating valve spindle (56), which can be displaced in a dependent and passive manner, being connected to the plug (40) on the opposite side thereof,
the drive-side valve spindle (44) and the compensating valve spindle (56) being guided out of the fluid chamber (34), so that the end faces facing away from the plug cannot be loaded with a fluid pressure and have an at least approximately equal outer diameter (D_{1,2}),
**characterized in that**
the drive-side valve spindle (44) is sealed with respect to a housing upper part (16) by means of first metal bellows (64) and a first metal membrane (66), and
the compensating valve spindle (56) is sealed with respect to a housing lower part (20) by means of second metal bellows (68) and a second metal membrane (70).

2. A shut-off valve (10) according to Patent Claim 1, wherein a first connection (76) between the drive-side valve spindle (44) and the plug (40) and a second connection (78) between the compensating valve spindle (56) and the plug (40) are constructed to be approximately the same with regards to the ability of the fluid (36) to flow around them.

3. The shut-off valve (10) according to one of the preceding patent claims, wherein the shut-off valve (10) is constructed in the manner of a quick-closing valve (12).

4. The shut-off valve (10) according to Patent Claim 3, wherein the drive unit (42) is formed with a threaded bushing (90) and a drive spindle (94), which is in engagement with the same, wherein the drive spindle (94) can be actuated for the axial displacement of the spindle nut (100) along the vertical axis (H) by means of a hand wheel (92).

5. The shut-off valve (10) according to Patent Claim 3 or 4, wherein the plug (40) can be raised, starting from a closed state, by means of the rotation of the hand wheel (92), counter to the action of the force of a spring (108), until an opened open state of the valve seat (50) is reached, wherein the plug (40) can be locked by means of a locking device (116) in the open state and the plug (40) can be pressed against the valve seat (50) by means of the triggering of the locking device (116) owing to the action of the force of the prestressed spring (108) and the closed open state is reached.

## Revendications

1. Système de déparasitage de signaux acoustiques lors d'une localisation acoustique dans le sol pour la localisation de défauts sur des lignes électriques enterrées par localisation de décharges d'arc électrique aux points de défaut par un appareil à tension de choc raccordé,
sachant que le système comprend un récepteur mobile (9) avec un capteur acoustique (8) et un capteur de champ magnétique (7) pour la saisie d'impulsions magnétiques se produisant simultanément lors de décharges d'arc électrique, une mémoire (10), une unité de calcul (11) et une unité d'exploitation (12),
**caractérisé**
**en ce que** le système est agencé pour acheminer les impulsions acoustiques saisies (6) à la mémoire (10) ainsi que pour compenser dans l'unité de calcul (11) grâce à un algorithme de calcul par une ou plusieurs impulsions acoustiques précédentes (6), sachant que la synchronisation des moments de démarrage des impulsions acoustiques individuelles (6) a lieu par l'impulsion magnétique (7) respectivement saisie correspondante et le résultat venant de l'unité de calcul (10) est acheminée à une unité d'exploitation (12) par le biais de l'algorithme de calcul,
et sachant que l'unité de calcul (11) est agencée à cet effet pour utiliser une formation de moyenne comme algorithme pour le déparasitage des signaux acoustiques

2. Système selon la revendication 1, **caractérisé en ce que** l'unité d'exploitation (12) est constitué comme un canal audio.

3. Système selon la revendication 1 ou 2, **caractérisé en ce que** le récepteur mobile (9) comprend un contacteur, comme un détecteur de mouvement (13), qui est agencé pour signaler une modification de position du récepteur (9), sachant qu'une réinitialisation des algorithmes dans l'unité de calcul (11) peut être réglée avec le contacteur pour le déparasitage des signaux acoustiques.

4. Système selon la revendication 1 ou 2, **caractérisé en ce que** le récepteur (9) comprend un contacteur, comme un capteur de contact, sachant qu'une réinitialisation des algorithmes dans l'unité de calcul (11) peut être réglée avec le contacteur pour le déparasitage des signaux acoustiques.

5. Procédé de déparasitage de signaux acoustiques lors d'une localisation acoustique dans le sol pour la localisation de défauts sur des lignes électriques enterrées par localisation de décharges d'arc électrique se répétant aux points de défaut par un appareil à tension de choc raccordé par le biais d'un récepteur mobile (9), qui comporte en plus d'un capteur acoustique (8), un capteur de champ magnétique (7) pour la saisie d'impulsions magnétiques se produisant simultanément lors de décharges d'arc électrique,
**caractérisé en ce que**
les impulsions acoustiques saisies (6) sont acheminées à une mémoire (10) et compensées par une ou plusieurs impulsions acoustiques précédentes (6) grâce à un algorithme de calcul par le biais d'une unité de calcul (11), sachant qu'une synchronisation des moments de démarrage des impulsions acoustiques individuelles (6) a lieu par l'impulsion magnétique (7) saisie respectivement correspondante et le résultat venant de l'unité de calcul (10) est acheminée à une unité d'exploitation (12) par le biais de l'algorithme de calcul,
et sachant que l'unité de calcul (11) utilise une formation de moyenne en tant qu'algorithme pour le déparasitage des signaux acoustiques.
